# EUROPEAN PATENT SPECIFICATION

(11) **EP 1 742 157 B1**
(45) Date of publication and mention of the grant of the patent: **21.01.2009**
(21) Application number: 05014454.2
(22) Date of filing: 04.07.2005
(51) Int. Cl.: G06F 17/30

(54) **Database system, method and active repository**
Datenbanksystem , Verfahren und aktive Ablage
Système de base de données, méthode et référentiel actif

(43) Date of publication of application: 10.01.2007
(73) Proprietor: SOFTWARE AG, 64297 Darmstadt (DE)
(72) Inventor: Schöning, Harald, 64807 Dieburg (DE)
(74) Representative: Heselberger, Johannes

(56) References cited:
- US-A- 6 049 664
- US-A1- 2004 015 476
- ANONYMOUS: "Unify NXJ 10.5"[Online] 2004, XP002340661 Retrieved from the Internet: URL:http://www.unify.com/downloads/pdfs/NX J_105_DataSheet.pdf> [retrieved on 2005-08-12]
- ANONYMOUS: "Above All Launches Offering, Lands Funding"[Online] 17 February 2004 (2004-02-17), XP002340662 Retrieved from the Internet: URL:http://www.ebizq.net/news/3791.html?&p p=1> [retrieved on 2005-08-15]

## Description

### 1. Technical field

The present invention relates to a data base system, a method for providing data in response to a data request from a client and an active repository for a data base system.

### 2. The prior art

Databases are nowadays a common technical tool for managing large amounts of data. Data base systems of the prior art typically comprise one or more storages for the actual data of the data base and one or more application servers servicing requests from clients for the stored data. A client intending to obtain specific data from the data base contacts one of the application servers using for example a standard web browser. The application server runs one or more applications to access the data of the data base, which may for example be a relational data base.

In such a known data base system, the logic implemented in the application server determines the options of the reporting, i.e. possible requests from the client for the data. The logic implemented in the application server is closely related to the structure of the stored data. If new data are added to the data base system, it must be stored with the same structure or data model as the already stored entries in order to be immediately accessible to the applications running on the application server and thereby to the clients. In other words, the options for reporting the content of the data base system are essentially static and predetermined by the structure and model of the stored data.

Consequently, if new data is to be stored in the data base system having a different structure, the overall data base system needs to be adapted, in particular by adding corresponding new application logic to the application server, which takes the different structure of the new data into account. This often leads to a long downtime of the overall data base system in order to load new applications onto the application server and to restart the overall system

Further, Unify NXJ™ 10.5 is known in the prior art as a comprehensive platform to quickly build and extend applications. Therefore pre-build components and services which form the basis for typical applications are provided by a repository library. These components enable developers to assemble new applications composed of new and existing forms and deployable to different servers such as BEA WebLogic or IBM Websphere. Thus the "reinvent the wheel" syndrome is avoided and the delivery time reduced to weeks rather than months.

Patent US6049664 describes a storage facility storing HTML pages and executable components which are applets. The HTML pages contain references to the applets and resolving these references corresponds to replacing them with the results of the execution of the applets, not with the code of the applets.

It is therefore the problem of the present invention to provide a data base system and a corresponding method, which allow to more flexibly and efficiently integrate data with varying structure into the data base system in order to overcome the above mentioned disadvantages of the prior art.

### 3. Summary of the invention

This problem is solved by a XML data base system having the features of claim 1. Accordingly, the XML data base system comprises an application server capable to receive a data request from a client and an active repository containing a plurality of XQuery application module and XML data wherein the application server is capable to issue in response to the data request from the client a request to the active repository for an executable XQuery application object and wherein the executable application object is composed out of one or more XQuery applications modules of the active repository, so that the execution of the application object provides the requested XML data. The active repository is capable to receive one or more additional XQuery application modules to enable the servicing of requests from the client for data having a different structure.

In contrast to the prior art, the application logic which actually processes a request from the client is not static, since the executable application object is dynamically composed from the available application modules of the active repository, which may change over time. Preferably, the active repository not only stores the application logic in the form of a plurality of application modules, but also executes itself the composed application object to provide the requested data.

In the presently preferred embodiment, the requested data are then passed from the active repository to the client via the application server, wherein the application server may perform additional formatting steps to present the requested data in a format suitable for the client.

Preferably, the requested data sent to the client comprise one or more hyperlinks enabling further data requests from the client to the application server. Since the application modules contained in the active repository may change, the hyperlinks generated in response to a data request can also dynamically change, in order to provide access to additional data with a new structure in the active repository.

Preferably, the application object is passed to the application server to fill in one or more parameters before being executed by the active repository. Accordingly, the executable application object is generated together by the application server and the active repository. In one embodiment, at least one of the application modules comprises a reference to a further application module, which is resolved, when composing the executable application object. The code of the application modules and the abstract and explicit references to other application modules contained therein determine together with the parameters supplied by the application sever the executable code of the application object, as it will be finally processed to provide the requested data for the client.

According to a further aspect, the present invention relates to a method of claim 6 for providing XML data in response to a data request from a client, the method comprising the steps of receiving the data request in an application server, issuing a request for an executable XQuery application object from the application server to an active repository, composing the requested executable XQuery application object from one or more XQuery application modules stored in the active repository, and executing the XQuery application object to provide the requested data

According to a still further aspect, the present invention concerns an active repository of claim 11 for a XML data base system capable of receiving a request for an executable XQuery application object from an application server in response to a data request from a client, the active repository comprising a plurality of XQuery application modules, for composing the requested executable XQuery application object and an application execution engine capable to execute the XQuery application object to provide the XML data requested from the client.

Further dependent claims relate to preferred embodiments of the claimed method and the claimed active repository.

### 4. Short description of the drawings

In the following detailed description presently preferred embodiments of the invention are described with reference to the drawings which show:
- Fig. 1:: An overview of the elements of a preferred embodiment of a data base system according to the invention;
- Fig. 2:: An example of an entry page, as it may be used in an application server of the present invention;
- Fig. 3:: An exemplary result of a data request of a client presented as a HTML page comprising various hyperlinks;
- Fig. 4: : The result of causing a further data request by clicking on the hyperlink "View" for the entry StockQuote in the HTML page of Fig.3;
- Fig. 5:: The result of the same data request leading to the HTML page of Fig. 3, however, after having stored a different application module in the active repository of the XML data base;
- Fig. 6:: The result of causing a further data request by clicking on the hyperlink "View" for the entry StockQuote in the HTML page of Fig. 5; and
- Fig. 7:: The result of causing a further data request by clicking on the hyperlink "View" for the entry WSCALL in the HTML page of Fig. 5.

### 5. Detailed description of preferred embodiments

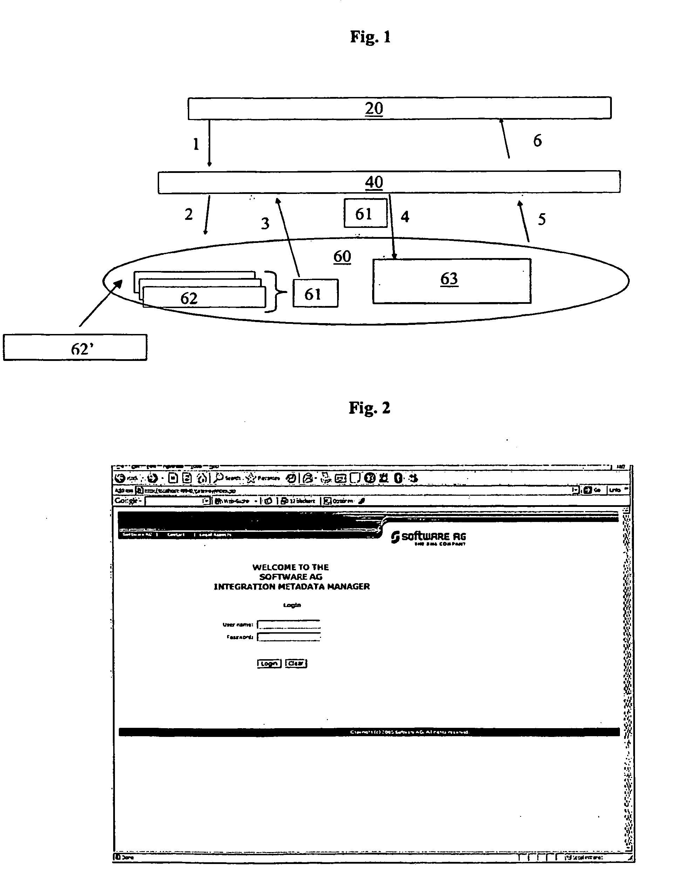

Fig. 1 presents a schematic overview of the various elements of a presently preferred embodiment of the overall data base system. As can be seen, the system comprises an application server 40 and an active repository 60, which cooperate to service requests of a client 20. The client 20, the application server 40 and the active repository 60 are typically arranged on a plurality of computer systems interconnected by a network such as the internet or an intranet. However, the application server 40 and the active repository 60 and even the client 20 may also be provided in a single computer system. Furthermore, instructions can be stored on a data carrier such as a CD or DVD and loaded onto the respective computer system so that it can serve as one or more elements of the data base system described below.

The application server 40, which is in the context of the present invention also sometimes called application driver, can be part of a larger server having in addition to the functionality described below further functions. The client 20 is in a preferred embodiment a standard Web browser such as the Microsoft Internet Explorer. Other clients using other networks and protocols, however, are also conceivable.

The active repository 60 is preferably a central place where data or metadata (in the following collectively called "data") is stored and maintained. The term "active" reflects the fact that the repository of the preferred embodiment of the present invention not only stores data but dynamically creates executable application objects and preferably executes such objects itself to provide the requested data as described below.

In the following, the operation of a data base system, as schematically shown in Fig. 1, is described. In a first step 1, a request for data in the repository 60 is sent from the client 20 to the application server 40. The application server 40 processes the request, which may contain one or more parameters, and generates a second request 2 for a corresponding application object 61, the execution of which will provide the requested data. In some cases the active repository 60 can immediately provide the requested application object 61, if there is an application module 62 in the active repository 60, which directly corresponds to the requested application object 61. However, in most cases the application object 61 is at first composed from a plurality of application modules 62. Preferably, each of the application modules 62 comprises a piece of code, which may belong to a certain class of code.

Some of the application modules 62 stored in the active repository 60 comprise references, which may be abstract or specific. An abstract reference refers to a set of further application modules 62, which are possibly further identified based on the parameters provided by the application server 40. A specific reference is a reference to a specific application module 62. Composing the executable application object 61 therefore comprises resolving all of the references of the required application modules 62. Subsequently, the application object 61 is passed in step 3 back to the application server 40, to fill in parameters, which may result from the request of the client or other sources. The finalized application object 61 is then in step 4 passed back to the active repository 60.

In addition to the plurality of application modules 62 and the data, the active repository 60 comprises preferably an application execution engine 63. Executing the generated application object 61 with the engine 63 finally provides the requested data, which are then in step 5 passed back to the application server 40. The application server 40 formats and possibly further processes the retrieved data, which are in step 6 finally sent to the client 20 for display or other purposes. The data sent back to the client 20 may comprise one or hyperlinks. Selecting one of the hyperlinks will cause a request to the application server 40 and thereby restart the overall procedure.

As can be seen, the various application modules 62 primarily determine how a request for data in the active repository 60 is serviced. Furthermore, it is apparent that new data having a different structure than the data initially stored in the repository can be added and made to the subject of data requests of the client 20 provided the necessary application modules 62' are also added to the active repository 60. Alternatively, new application modules 62' may be added, which process already existing data of the active repository 60 in a different manner allowing the discovery of new interdependencies of the data. The response to the same data request of a client 20 may therefore not only yield different results depending on the data in the active repository 60, it may due to the use of hyperlinks in the provided data also give raise to further requests, which were initially - based on the original set of application modules 62 - not possible. Adding new application modules 62' to the active repository 60 does not affect the operation of the application server 40. Accordingly, there is no need to stop, reload or restart the application server 40.

It is apparent the described data base system and its operating method provide a by far greater flexibility for reporting than data base systems and methods of the

### prior art.

In the following, an example of a presently preferred embodiment of the method and the data base system according to the invention are described in more detail, wherein reference will be made to an XML data base as an active repository. However, it is to be understood that the present invention is not limited to a specific type of data base and rather concerns a novel architecture of a data base system and a corresponding method.

Fig. 2 presents as the first page of the exemplary application a login screen to get the authentication information needed to access the active repository. After supplying this information, a JSP page is activated which serves as an application server. Rather than having a fixed content, the next page primarily consists of an Iframe whose content is determined by the described method. In the JSP page, this reads:

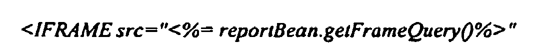

The framequery returned is as follows:

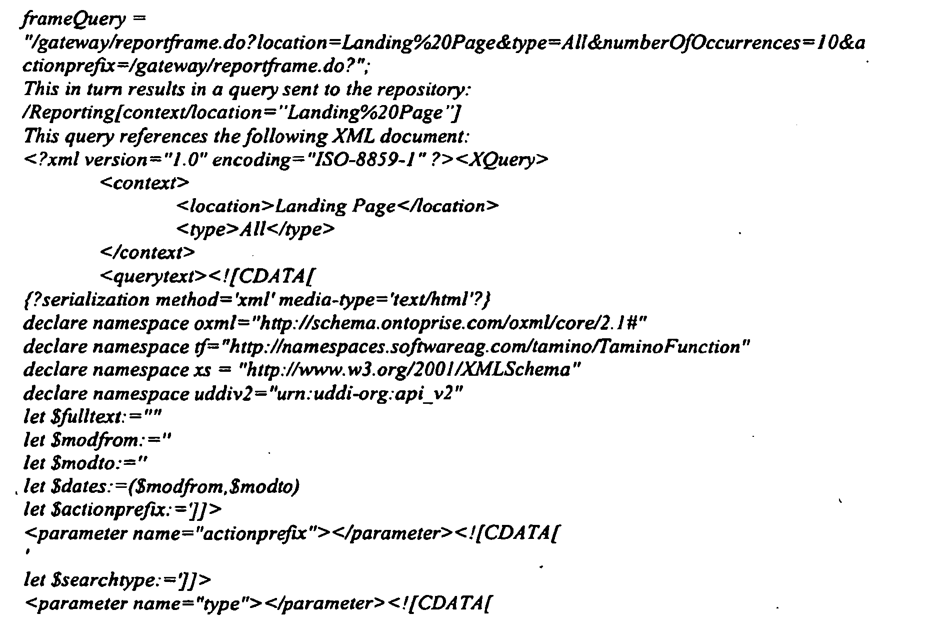

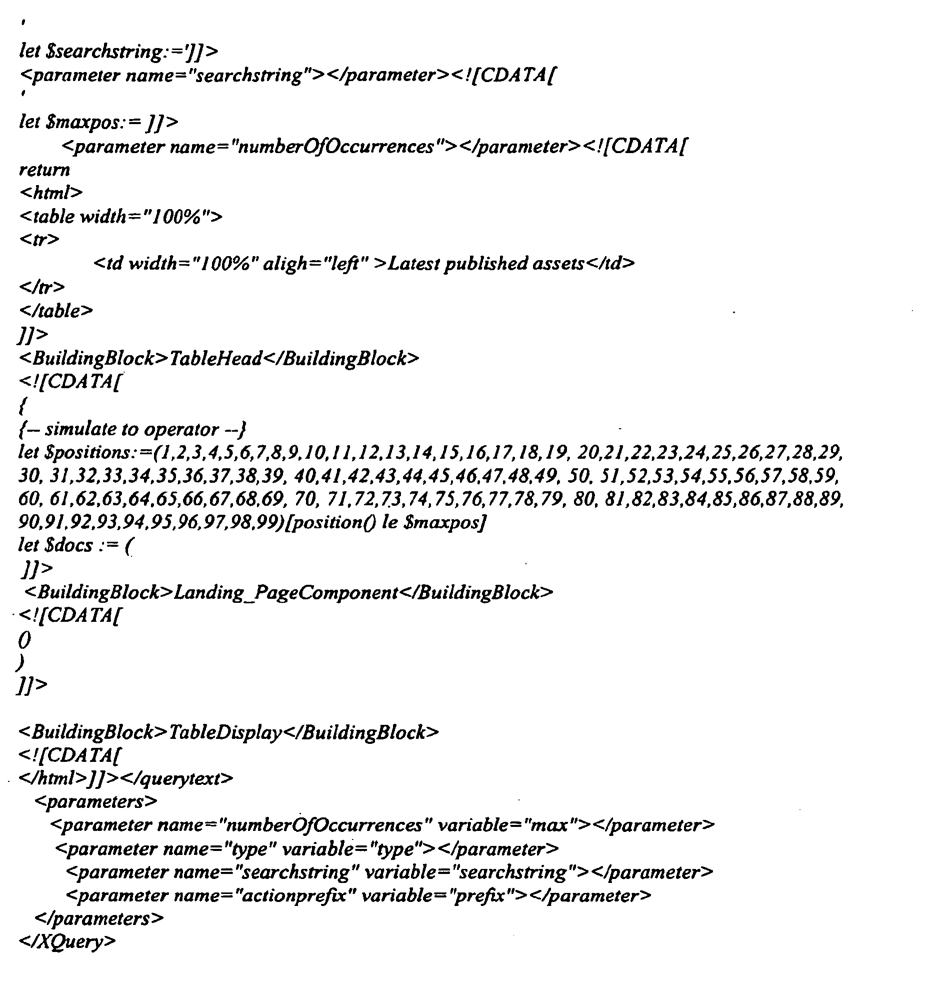

Before the active repository returns this document, it replaces all <BuildingBlock> elements by results of the following query:

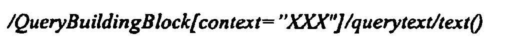

Where "XXX" is replaced by the contents of the <BuildingBlock> element. This query returns one or multiple application modules, wherein a typical application module is structured like this:

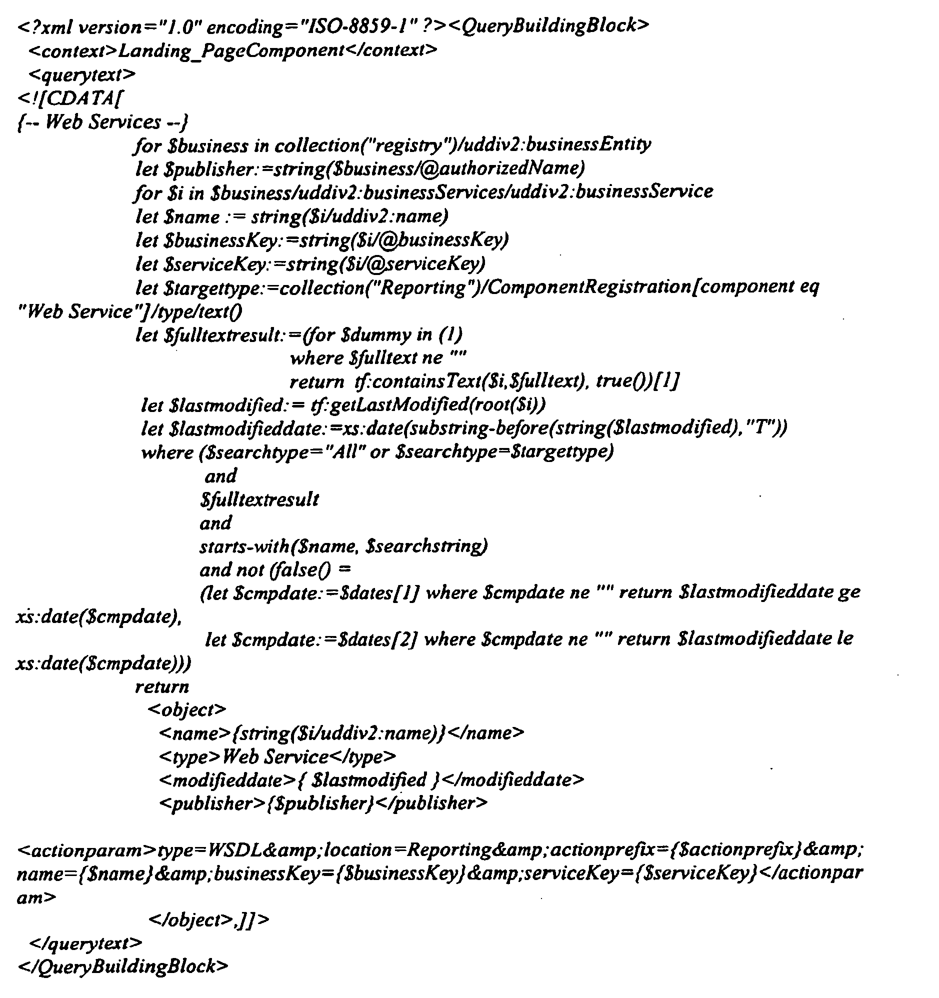

Hence, the active repository returns the following document:

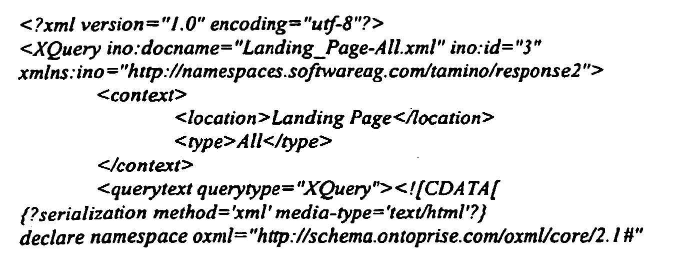

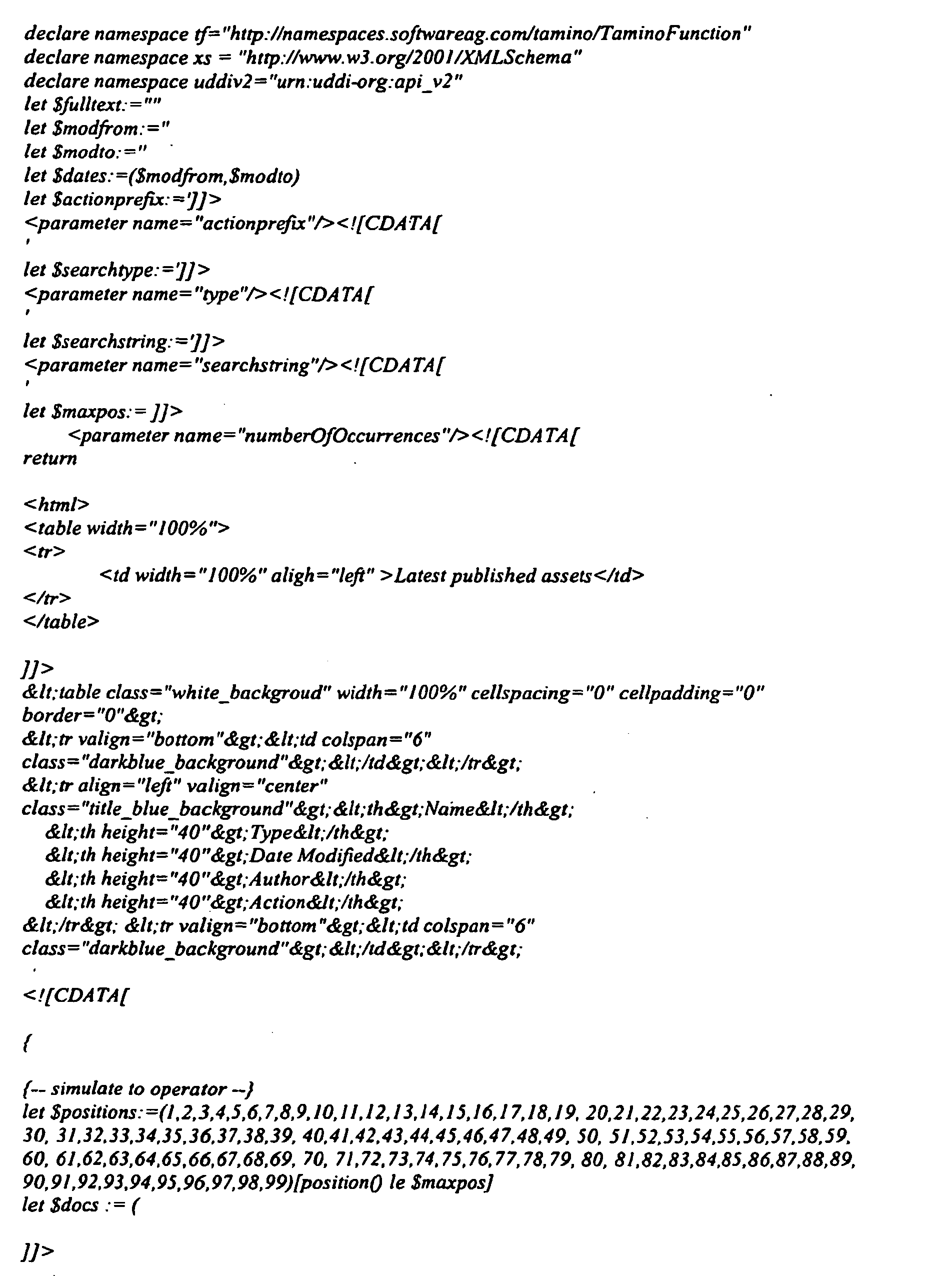

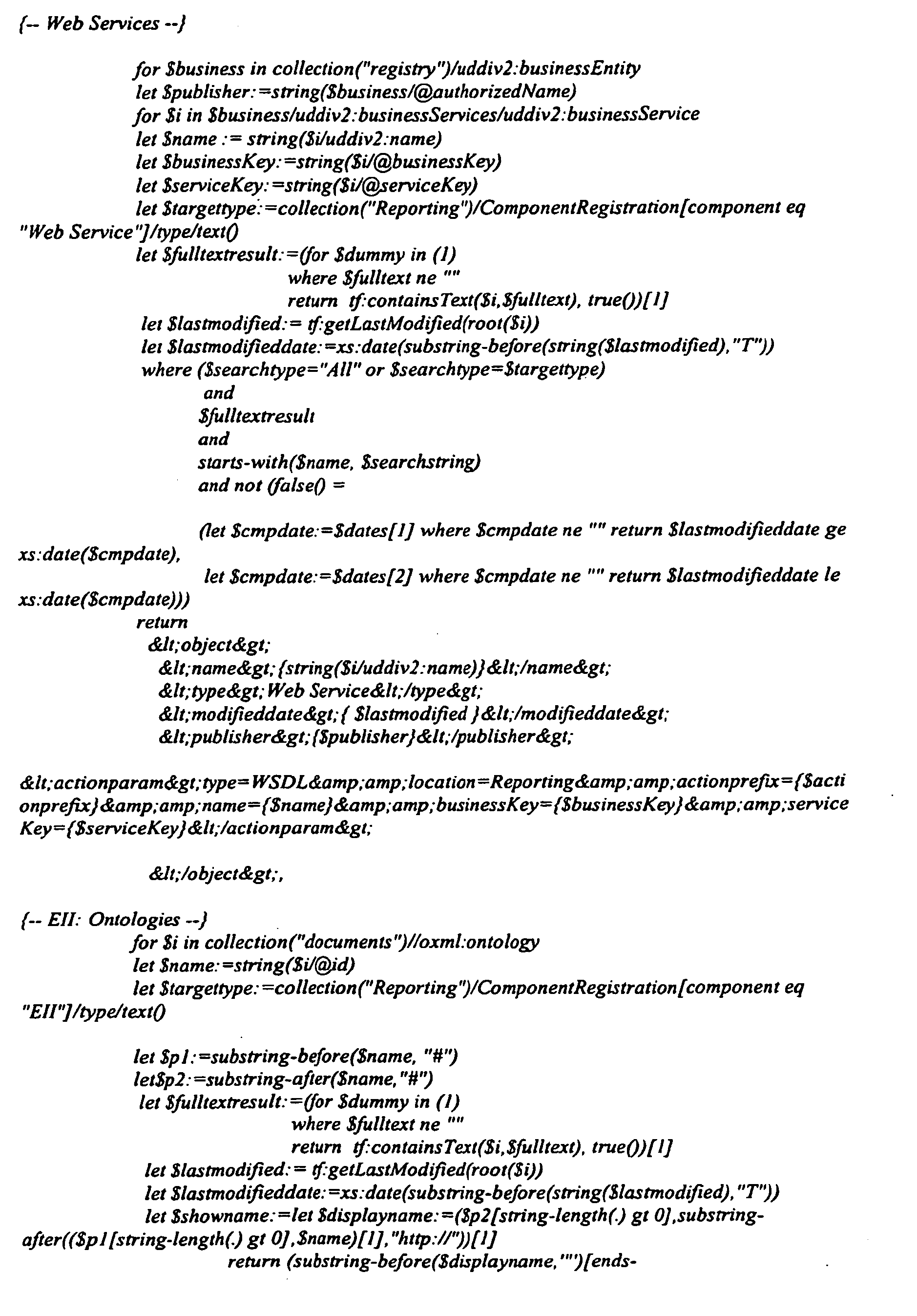

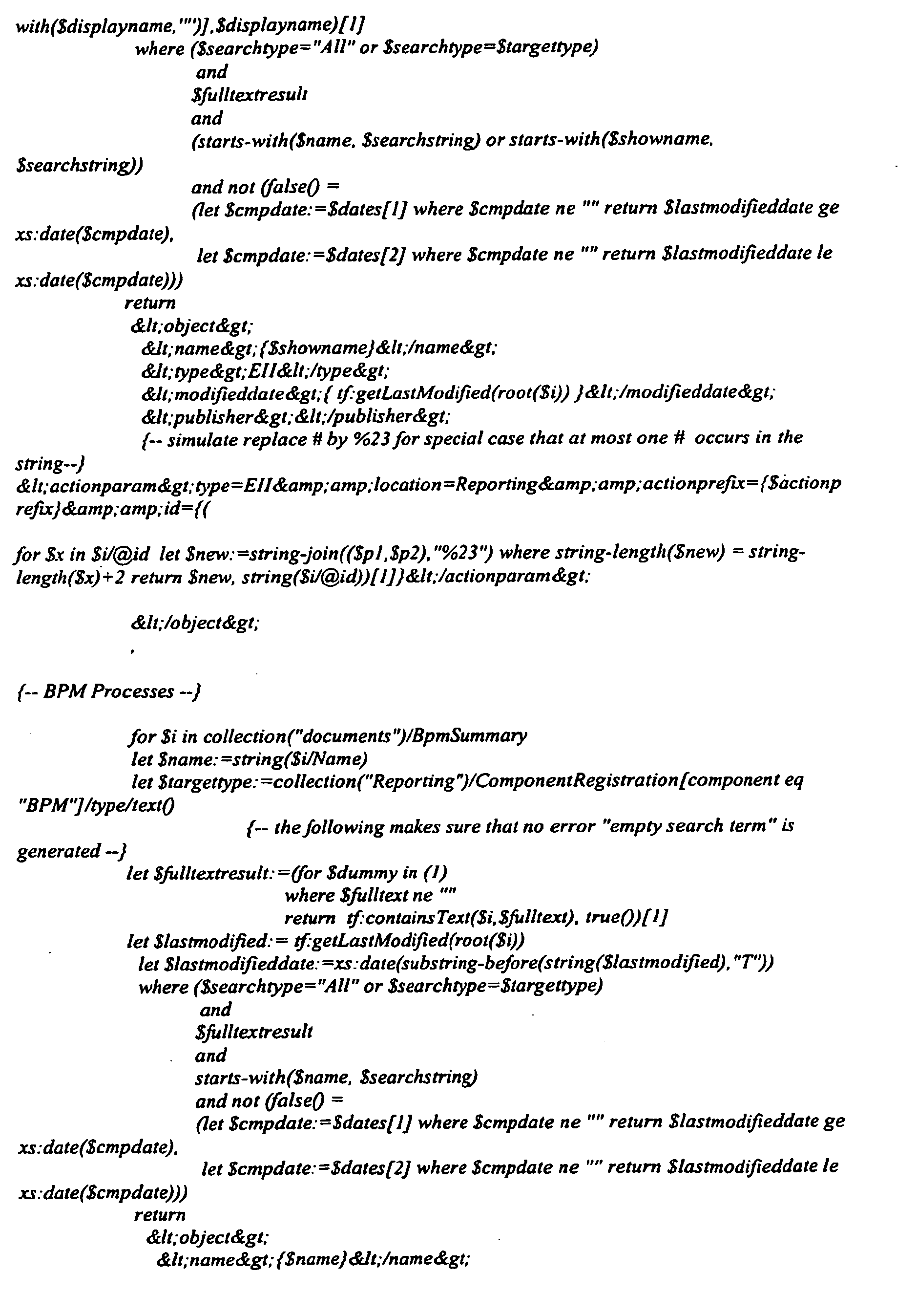

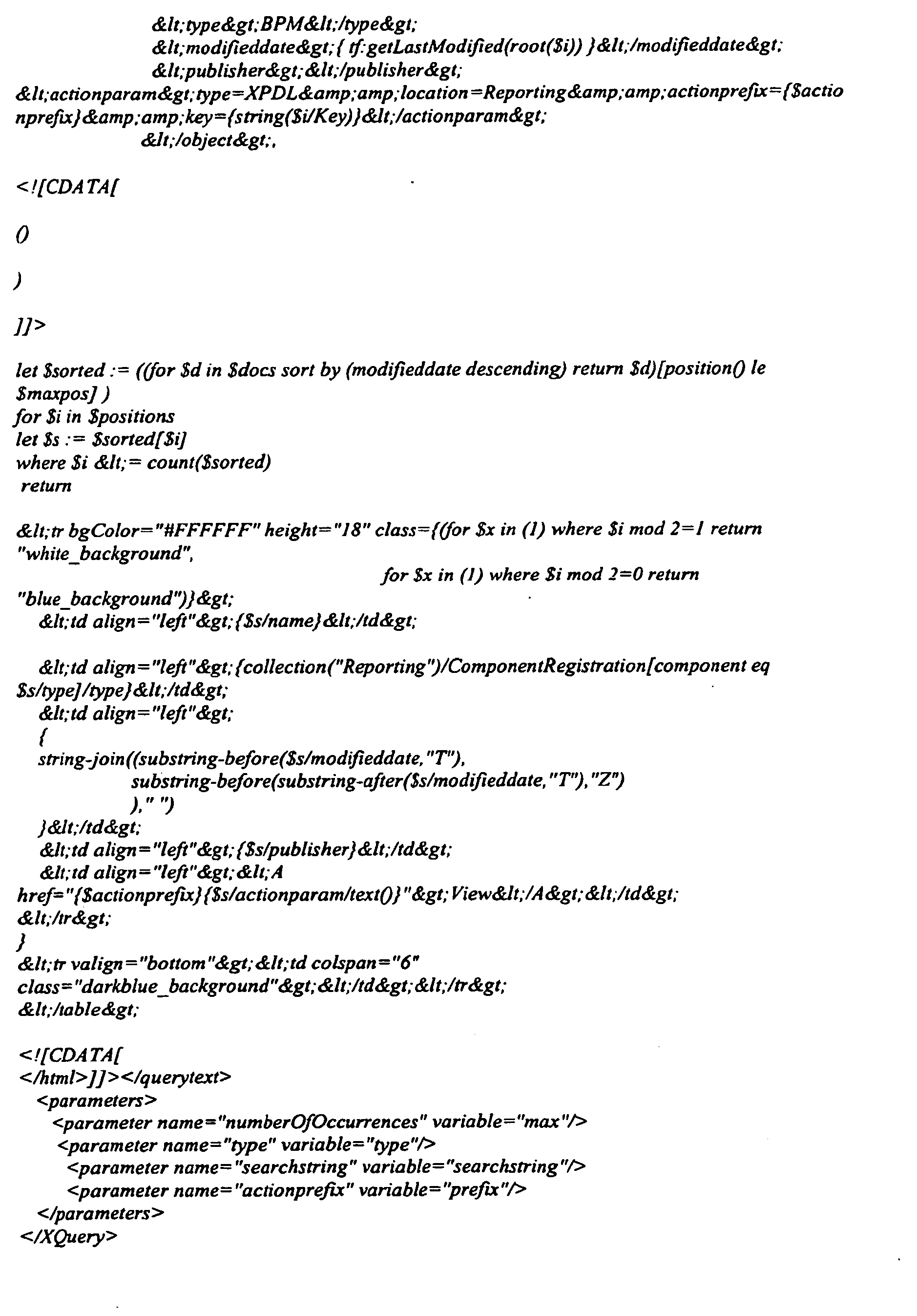

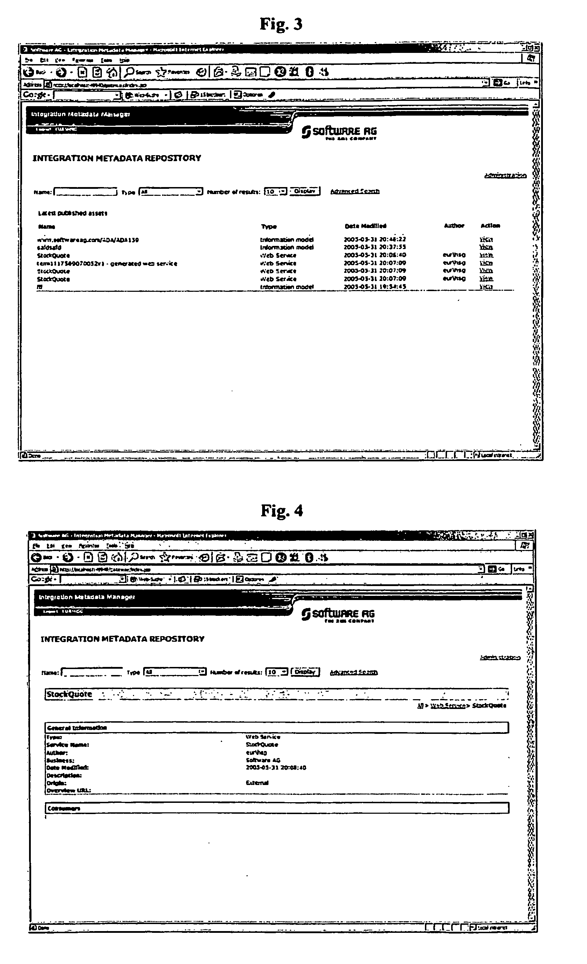

The application server replaces the parameters (e.g. numberOfOccurrences) with values and then sends the query back to the active repository for execution. The query results in HTML, which is then displayed in the Iframe mentioned above, which is shown in Fig. 3.

The "View" hyperlinks presented in the HTML page of Fig. 3 have a varying shape, e.g. :
*href="*/*gateway*/*reportframe.do?type=WSDL&location=Reporting&actionprefix=*/*gate way*/*reportframe.do?&name=StockQuote&businessKey=7a298710-d20d-1 1d9-a899-b27c39835782&serviceKey=91747090-d20f-11d9-a899-8a92415e57a4"*

Clicking on these hyperlinks triggers the same procedure as described above. However, arbitrary new parameters can occur here, which are replaced in the query identified by the "type" and "location" parameters. The result of clicking on one of the hyperlinks shown in the example presented in Fig. 3 is again HTML, as it is exemplary presented in Fig. 4, showing the page for the Webservice "Stockquote".

It is to be noted that the hyperlinks result from the evaluation, i.e. execution of those query parts that were represented as BuildingBlocks in the query above. This makes it possible to add hyperlink structures of any arbitrary type to the HTML page just by storing a new building block as a new application module into the active repository. However, the application server, in the present example the servlet container, remains completely unaffected.

As a comparative example, storing the following XML documents to the active repository, the reports resulting from the same initial request can be modified:

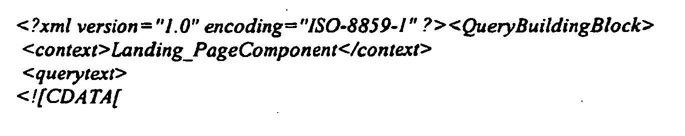

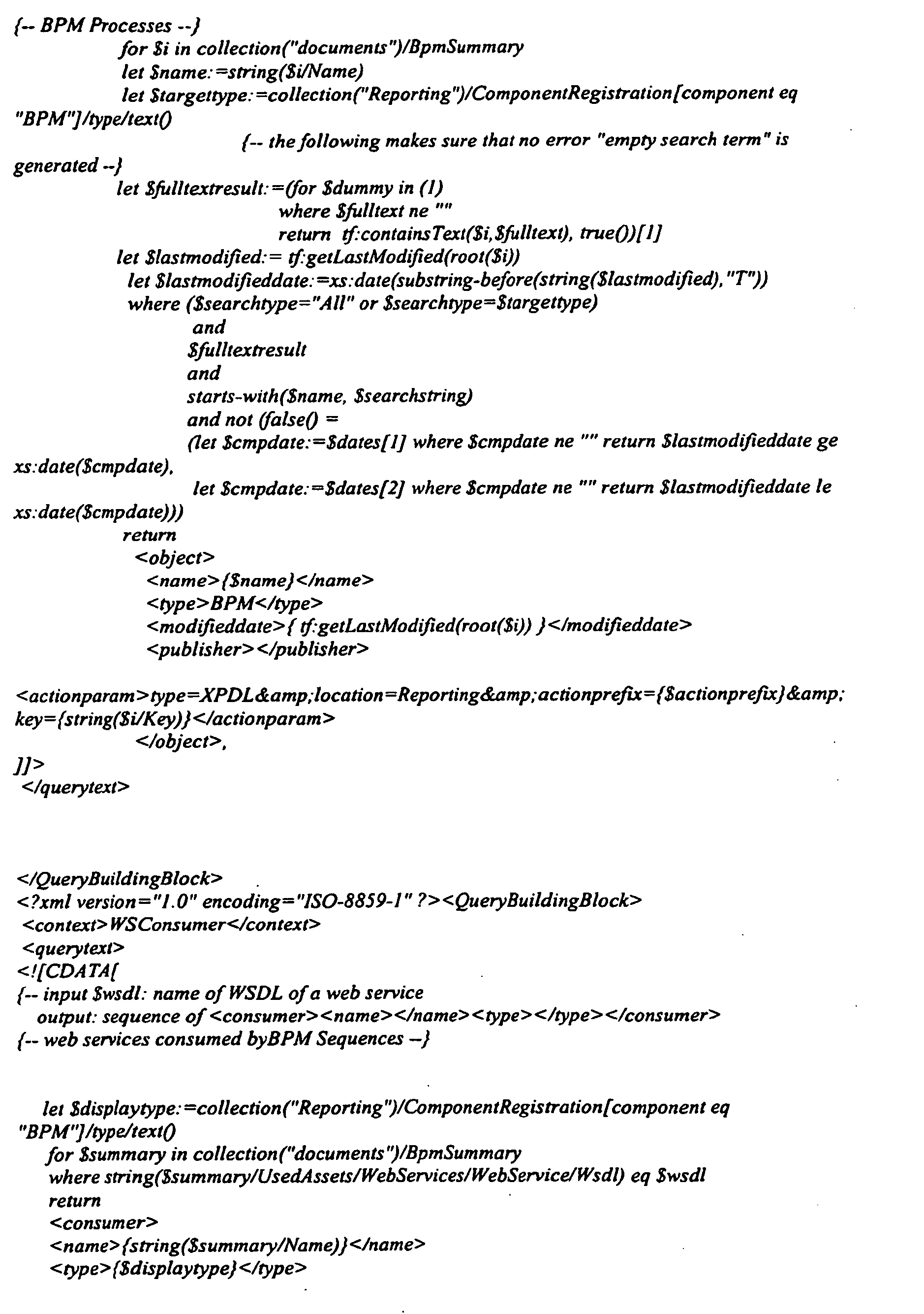

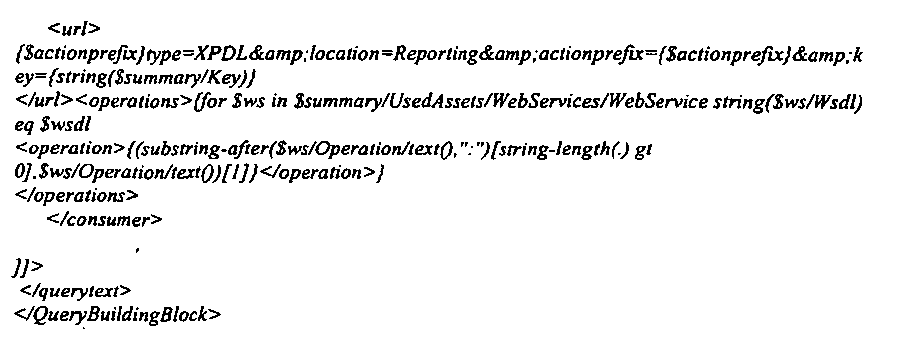

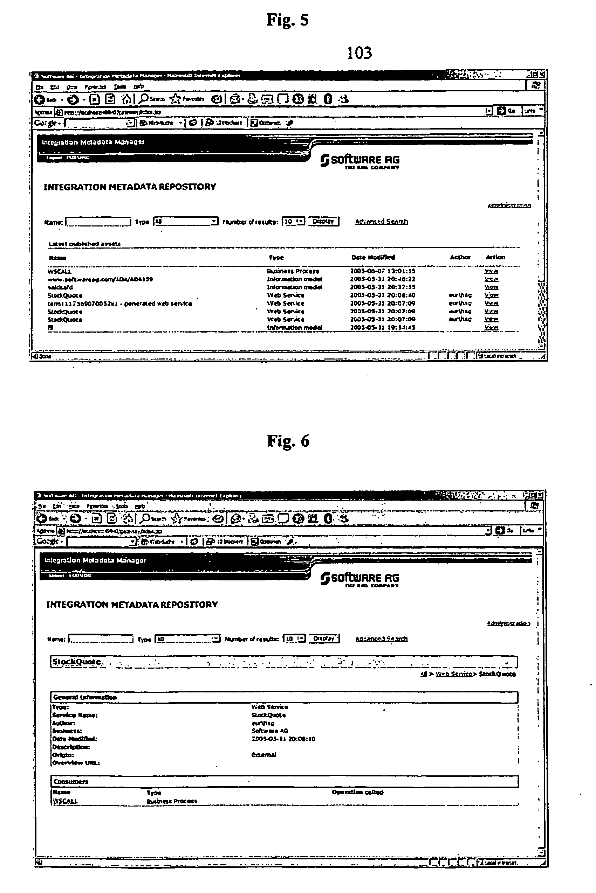

This leads to a new entry "WSCALL" to be displayed on the HTML page for the client, as shown in Fig. 5. The "View" hyperlink of WSCALL has the following shape (which differs from the above indicated other "View" hyperlinks):
*href="*/*gateway*/*reportframe.do?type=XPDL&location=Reporting&act ionprefix=*/*gateway*/*reportframe.do?&key=mykey*".

Another difference of the comparative example is that a detailed view of the web service StockQuote as shown in Fig. 4 changes to an HTML page as shown in Fig. 6. As can be seen, a consumer of this Web service is now shown.

WSCALL, finally, is in this example another hyperlink:
*href="*/*gateway*/*reportframe.do?type=XPDL&location =Reporting&actionprefix=lgate waylreportframe.do?&key=mykey"*

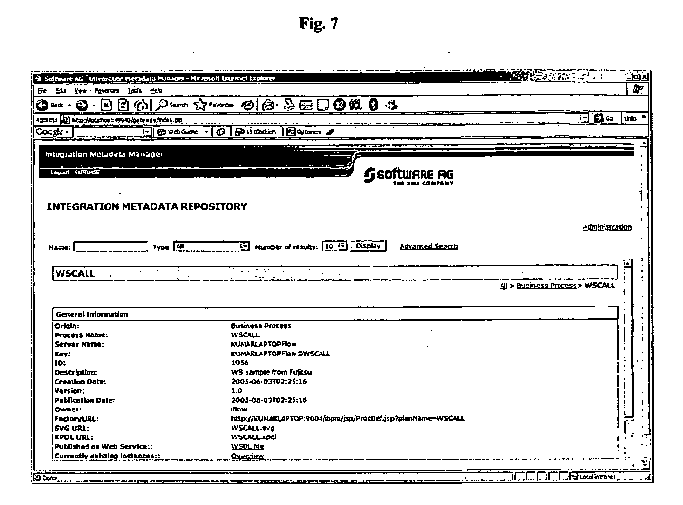

Also, by storing another XQuery, a new detailed report for the new object type can be established, which is exemplary shown in Fig. 7.

The described XML-example illustrates the great amount of flexibility provided by the data base system and the method of the preferred embodiments of the present invention. However, this example serves only for illustration and is not intended to limit the scope of the present invention to any of its specific details.

## Claims

1. XML data base system comprising:
a. an application server (40) capable to receive a data request from a client (20);
b. an active repository (60) containing a plurality of XQuery application modules (62) and XML data;
c. wherein the application server (40) is capable to issue in response to the data request from the client (20) a request to the active repository (60) for an executable XQuery application object (61); and
d. wherein the executable XQuery application object (61) is dynamically composed in response to the request from the application server out of XQuery application modules (62) of the active repository (60), wherein at least one of the XQuery application modules (62) comprises references to further XQuery application modules (62), which are resolved by replacing each of said references with the XQuery code of one or more of said further XQuery application modules, when composing the executable XQuery application object (61), so that
e. the execution of the XQuery application object (61) provides the requested XML data; wherein
f. the active repository (60) is capable to receive one or more further XQuery application modules (62') to enable the servicing of requests from the client (20) for XML data having a different structure than the XML data initially stored in the active repository (60) and the different processing of the initially stored XML data without stopping, reloading or restarting the application server (40).

2. XML data base system according to the preceding claim, wherein the XQuery application object (61) is executed by the active repository (60) to provide the requested data.

3. XML data base system according to the preceding claim 1 or 2, wherein the requested data are passed from the active repository (60) to the client (20) via the application server (40).

4. XML data base system according to any of the preceding claims, wherein the XQuery results comprise one or more hyperlinks for further XQuery data requests from the client (20) to the application server (40).

5. XML data base system according to any of the preceding claims; wherein the executable XQuery application object (61) is passed to the application server (40) to fill in one or more parameters before being executed by the active repository (60).

6. Method for providing XML data in response to a data request from a client (20), the method comprising the steps of:
a. receiving the data request in an application server (40);
b. issuing a request for an executable XQuery application object (61) from the application server (40) to an active repository (60) containing XML data;
c. dynamically composing in response to the request from the application server the requested executable XQuery application object (61) from XQuery application modules (62) stored in the active repository (60), wherein at least one of the XQuery application modules (62) comprises references to further XQuery application modules (62),which are resolved by replacing each of said references with the XQuery code of one or more of said further XQuery application modules, when composing the executable XQuery application object (61);
d. executing the XQuery application object (61) to provide the requested XML data; and
e. receiving one or more further XQuery application modules (62') by the active repository (60) to enable the servicing of data requests from the client (20) for XML data having a different structure than the XML data initially stored in the active repository (60) and the different processing of the initially stored XML data without stopping, reloading or restarting the application server (40).

7. Method according to the preceding claim, wherein the XQuery application object (61) is executed by the active repository (60) to provide the requested data.

8. Method according to the preceding claims 6 or 7, further comprising the step of passing the requested data from the active repository (60) to the client (20) via the application server (40).

9. Method according to any of the preceding claims 6 - 8, wherein the XQuery result comprises hyperlinks for further XQuery data requests from the client (20) to the application server (40).

10. Method according to any of the preceding claims 6 - 9, further comprising the step of passing the XQuery application object (61) to the application server (40) to fill in one or more parameters before executing the application object (61) by the active repository (60).

11. Active repository (60) for a XML data base system capable of receiving a request for an executable XQuery application object (61) from an application server (40) in response to a data request from a client (20), the active repository comprising XML data and:
a. a plurality of XQuery application modules (62), for dynamically composing the requested executable XQuery application object (61) in response to the request from the application server, wherein at least one of the XQuery application modules (62) comprises references to further XQuery application modules (62), which are resolved by replacing each of said references with the XQuery code of one or more of said further XQuery application modules, when composing the executable XQuery application object (61),
b. an XQuery application execution engine (63) capable to execute the application object (61) to provide the XML data requested from the client (20);
c. wherein the active repository (60) is further adapted to receive additional XQuery application modules (62') for composing executable XQuery application objects (61) to enable the servicing of data requests from the client (20) forXML data having a different structure than the XML data initially stored in the active repository (60) and the different processing of the initially stored XML data without stopping, reloading or restarting the application server (40).

12. Arrangement of one or more computer systems comprising a data base system according to any of the claims 1 - 5.

13. Computer program product for performing a method of any of the claims 6 - 10.

## Patentansprüche

1. XML-Datenbanksystem, aufweisend:
a. einen Applikationsserver (40), ausgebildet um eine Datenanfrage eines Clients (20) zu empfangen;
b. ein Active Repository (60), das eine Vielzahl von XQuery-Applikationsmodulen (62) und XML-Daten enthält;
c. wobei der Applikationsserver (40) ausgebildet ist, als Antwort auf die Datenanfrage des Clients (20) eine Anfrage an das Active Repository (60) nach einem ausführbaren XQuery-Applikationsobjekt (61) zu stellen; und
d. wobei das ausführbare XQuery-Applikationsobjekt (61) als Antwort auf die Anfrage vom Applikationsserver dynamisch aus XQuery-Applikationsmodulen (62) des Active Repository (60) zusammengesetzt wird, wobei zumindest eines der XQuery-Applikationsmodule (62) Referenzen zu weiteren XQuery-Applikationsmodulen (62) aufweist, welche beim Zusammensetzen des ausführbaren XQuery-Applikationsobjekts (61) aufgelöst werden durch ein Ersetzen jeder der Referenzen mit dem XQuery-Code eines oder mehrerer der weiteren XQuery-Applikationsmodule, so dass
e. das Ausführen des XQuery-Applikationsobjekts (61) die angefragten XML-Daten bereitstellt; wobei
f. das Active Repository (60) ausgebildet ist, um ein oder mehrere weitere XQuery-Applikationsmodule (62') zu empfangen, um das Bedienen von Anfragen vom Client (20) nach XML-Daten mit einer sich von der Struktur der ursprünglich im Active Repository (60) gespeicherten XML-Daten unterscheidenden Struktur zu ermöglichen sowie die unterschiedliche Verarbeitung der ursprünglich gespeicherten XML-Daten, ohne den Applikationsserver (40) zu stoppen, neu zu laden oder neu zu starten.

2. XML-Datenbanksystem nach dem vorherigen Anspruch, wobei das XQuery-Applikationsobjekt (61) vom Active Repository (60) ausgeführt wird, um die angefragten Daten bereitzustellen.

3. XML-Datenbanksystem nach Anspruch 1 oder 2, wobei die angefragten Daten vom Active Repository (60) zum Client (20) über den Applikationsserver (40) übertragen werden.

4. XML-Datenbanksystem nach einem der vorherigen Ansprüche, wobei die XQuery-Ergebnisse einen oder mehrere Hyperlinks für weitere XQuery-Datenanfragen vom Client (20) zum Applikationsserver (40) aufweisen.

5. XML-Datenbanksystem nach einem der vorherigen Ansprüche, wobei das ausführbare XQuery-Applikationsobjekt (61) vor dem Ausführen durch das Active Repository (60) zum Applikationsserver (40) übertragen wird, um einen oder mehrere Parameter zu befüllen.

6. Verfahren zum Bereitstellen von XML-Daten als Antwort auf eine Datenanfrage von einem Client (20), das Verfahren aufweisend die Schritte:
a. Empfangen der Datenanfrage in einem Applikationsserver (40);
b. Stellen einer Anfrage nach einem ausführbaren Applikationsobjekt (61) vom Applikationsserver (40) an ein Active Repository (60), welches XML-Daten enthält;
c. dynamisches Zusammensetzen des angefragten ausführbaren Applikationsobjekts (61) aus im Active Repository (60) gespeicherten XQuery-Applikationsmodulen (62) als Antwort auf die Anfrage vom Applikationsserver, wobei zumindest eines der XQuery-Applikationsmodule (62) Referenzen zu weiteren XQuery-Applikationsmodulen (62) aufweist, welche beim Zusammensetzen des ausführbaren XQuery-Applikationsobjekts (61) aufgelöst werden durch ein Ersetzen jeder der Referenzen mit dem XQuery-Code eines oder mehrerer der weiteren XQuery-Applikationsmodule;
d. Ausführen des XQuery-Applikationsobjekts (61), um die angefragten XML-Daten bereitzustellen; und
e. Empfangen eines oder mehrerer weiterer XQuery-Applikationsmodule (62') durch das Active Repository (60), um das Bedienen von Anfragen vom Client (20) nach XML-Daten mit einer sich von der Struktur der ursprünglich im Active Repository (60) gespeicherten XML-Daten unterscheidenden Struktur zu ermöglichen sowie die unterschiedliche Verarbeitung der ursprünglich gespeicherten XML-Daten, ohne den Applikationsserver (40) zu stoppen, neu zu laden oder neu zu starten.

7. Verfahren nach dem vorherigen Anspruch, wobei das XQuery-Applikationsobjekt (61) vom Active Repository (60) ausgeführt wird, um die angefragten Daten bereitzustellen.

8. Verfahren nach einem der vorherigen Ansprüche 6 oder 7, ferner aufweisend den Schritt der Übertragung der angefragten Daten vom Active Repository (60) zum Client (20) über den Applikationsserver (40).

9. Verfahren nach einem der vorherigen Ansprüche 6 - 8, wobei das XQuery-Ergebnis einen oder mehrere Hyperlinks für weitere XQuery-Datenanfragen vom Client (20) zum Applikationsserver (40) aufweist.

10. Verfahren nach einem der vorherigen Ansprüche 6 - 9, ferner aufweisend den Schritt der Übertragung des ausführbaren XQuery-Applikationsobjekts (61) vor dem Ausführen durch das Active Repository (60) zum Applikationsserver (40), um einen oder mehrere Parameter zu befüllen.

11. Active Repository (60) für ein XML-Datenbanksystem, ausgebildet um eine Anfrage zu empfangen nach einem ausführbaren XQuery-Applikationsobjekt (61) von einem Applikationsserver (40) als Antwort auf eine Datenanfrage von einem Client (20), wobei das Active Repository (60) XML-Daten aufweist und:
a. eine Vielzahl von XQuery-Applikationsmodulen (62) zum dynamischen Zusammensetzen des angefragten ausführbaren XQuery-Applikationsobjekts (61) als Antwort auf die Anfrage des Applikationsservers, wobei zumindest eines der XQuery-Applikationsmodule (62) Referenzen zu weiteren XQuery-Applikationsmodulen (62) aufweist, welche beim Zusammensetzen des ausführbaren XQuery-Applikationsobjekts (61) aufgelöst werden durch ein Ersetzen jeder der Referenzen mit dem XQuery-Code eines oder mehrerer der weiteren XQuery-Applikationsmodule,
b. eine XQuery-Applikations-Ausführungsmaschine (63), ausgebildet um das Applikationsobjekt (61) auszuführen, um die vom Client (20) angefragten XML-Daten bereitzustellen;
c. wobei das Active Repository (60) ferner ausgebildet ist, um weitere XQuery-Applikationsmodule (62') zum Zusammensetzen von ausführbaren XQuery-Applikationsobjekten (61) zu empfangen, um das Bedienen von Anfragen vom Client (20) nach XML-Daten mit einer sich von der Struktur der ursprünglich im Active Repository (60) gespeicherten XML-Daten unterscheidenden Struktur zu ermöglichen sowie die unterschiedliche Verarbeitung der ursprünglich gespeicherten XML-Daten, ohne den Applikationsserver (40) zu stoppen, neu zu laden oder neu zu starten.

12. Anordnung eines oder mehrerer Computersysteme aufweisend ein Datenbanksystem nach einem der Ansprüche 1 - 5.

13. Computerprogrammprodukt zum Ausführen eines Verfahrens nach einem der Ansprüche 6 - 10.

## Revendications

1. Système de base de données XML, comprenant :
a. un serveur d'application (40) capable de recevoir une requête de données d'un client (20) ;
b. un dépôt actif (60) contenant une pluralité de modules d'application XQuery (62) et de données XML ;
c. dans lequel le serveur d'application (40) est capable de délivrer en réponse à la requête de données du client (20) une requête au dépôt actif (60) pour une application XQuery exécutable objet (61) ; et
d. dans lequel l'application XQuery exécutable objet (61) est dynamiquement composée en réponse à la requête du serveur d'application à partir de modules d'application XQuery (62) du dépôt actif (60), où au moins l'un des modules d'application XQuery (62) comprend des références à d'autres modules d'application XQuery (62), qui sont résolues en remplaçant chacune desdites références par le code XQuery d'un ou plusieurs desdits autres modules d'application XQuery, lors de la composition de l'application XQuery exécutable objet (61), de sorte que
e. l'exécution de l'application XQuery objet (61) produise les données XML requises ; dans lequel
f. le dépôt actif (60) est capable de recevoir un ou plusieurs autres modules d'application XQuery (62') pour activer le service de requête en provenance du client (20) de données XML ayant une structure différente de celle des données XML initialement stockées dans le dépôt actif (60) et le traitement différent des données XML initialement stockées sans interruption, rechargement ou redémarrage du serveur d'application (40).

2. Système de base de données XML selon la revendication précédente, dans lequel l'application XQuery objet (61) est exécutée par le dépôt actif (60) pour reproduire les données requises.

3. Système de base de données XML selon la revendication précédente 1 ou 2, dans lequel les données requises sont passées du dépôt actif (60) au client (20) via le serveur d'application (40).

4. Système de base de données XML selon l'une des revendications précédentes, dans lequel les résultats XQuery comprennent un ou plusieurs hyperliens pour d'autres requêtes de données XQuery provenant du client (20) au serveur d'application (40).

5. Système de base de données XML selon l'une des revendications précédentes, dans lequel l'application XQuery exécutable objet (61) est passée au serveur d'application (40) pour remplissage d'un ou plusieurs paramètres avant d'être exécutée par le dépôt actif (60).

6. Procédé pour produire des données XML en réponse à une requête de données en provenance d'un client (20), ce procédé comprenant les étapes suivantes :
a. recevoir la requête de données dans un serveur d'application (40) ;
b. délivrer une requête pour une application XQuery exécutable objet (61) depuis le serveur d'application (40) vers un dépôt actif (60) contenant des données XML ;
c. composer dynamiquement en réponse à la requête provenant du serveur d'application l'application XQuery exécutable objet (61) à partir de modules d'application XQuery (62) stockés dans le dépôt actif (60), où au moins l'un des modules d'application XQuery (62) comprend des références à d'autres modules d'application XQuery (62), qui sont résolues en remplaçant chacune desdites références par le code de un ou plusieurs desdits autres modules d'application XQuery lors de la composition de l'application XQuery exécutable objet (61) ;
d. exécuter l'application XQuery objet (61) pour produire les données XML requises ; et
e. recevoir un ou plusieurs autres modules d'application XQuery (62') par le dépôt actif (60) pour activer le service de requête de données en provenance du client (20) pour des données XML ayant une structure différente des données XML initialement stockées dans le dépôt actif (60) et le traitement différent des données XML initialement stockées sans cessation, rechargement ou redémarrage du serveur d'application (40).

7. Procédé selon la revendication précédente, dans lequel l'application XQuery objet (61) est exécutée par le dépôt actif (60) pour reproduire les données requises.

8. Procédé selon les revendications précédentes 6 ou 7, comprenant en outre l'étape consistant à passer les données requises du dépôt actif (60) au client (20) via le serveur d'application (40).

9. Procédé selon les revendications précédentes 6 à 8, dans lequel les résultats XQuery comprennent des hyperliens pour d'autres requêtes de données XQuery provenant du client (20) au serveur d'application (40).

10. Procédé selon les revendications précédentes 6 à 9, comprenant en outre l'étape consistant à passer l'application XQuery exécutable objet (61) au serveur d'application (40) pour remplissage d'un ou plusieurs paramètres avant d'être exécutée par le dépôt actif (60).

11. Dépôt actif (60) pour un système de base de données XML capable de recevoir une requête pour une application XQuery exécutable objet (61) depuis un serveur d'application (40) en réponse à une requête de données en provenance d'un client (20), le dépôt actif comprenant des données XML et :
a. une pluralité de modules d'application XQuery (62), pour composer dynamiquement l'application XQuery exécutable objet requise (61) en réponse à la requête provenant du serveur d'application, où au moins l'un des modules d'application XQuery (62) comprend des références à d'autres modules d'application XQuery (62), qui sont résolues en remplaçant chacune desdites références par le code de un ou plusieurs desdits autres modules d'application XQuery lors de la composition de l'application XQuery exécutable objet (61) ;
b. un moteur d'exécution d'application XQuery (63) capable d'exécuter l'application XQuery objet (61) pour produire les données XML requises par le client (20) ;
c. dans lequel le dépôt actif (60) est en outre apte à recevoir des modules d'application XQuery additionnels (62') pour composer des applications XQuery exécutables objets (61) pour activer le service de requête de données en provenance du client (20) pour des données XML ayant une structure différente des données XML initialement stockées dans le dépôt actif (60) et le traitement différent des données XML initialement stockées sans interruption, rechargement ou redémarrage du serveur d'application (40).

12. Configuration d'un ou plusieurs systèmes informatiques comprenant un système de base de données selon l'une des revendications 1 à 5.

13. Programme-produit informatique pour mettre en oeuvre un procédé selon l'une des revendications 6 à 10.
